# EUROPEAN PATENT APPLICATION

(11) **EP 2 319 816 A1**
(43) Date of publication of application: **11.05.2011**
(21) Application number: 09810031.6
(22) Date of filing: 28.08.2009
(51) Int. Cl.: C04B 35/46, B01D 39/20, B01J 35/04, B01J 37/04, B01J 37/08, C04B 38/00, F01N 3/02

(54) **POROUS CERAMIC MEMBER, METHOD FOR PRODUCING SAME AND FILTER**

(30) Priority: 28.08.2008 JP 2008219241; 24.12.2008 JP 2008327194
(71) Applicant: Kyocera Corporation, Kyoto-shi Kyoto 612-8501 (JP)
(72) Inventor: TATEYAMA,Yasuharu, Kirishima-shi Kagoshima 899-4312 (JP); SHIGEOKA,Toshiaki, Kirishima-shi Kagoshima 899-4312 (JP); NISHIKAWA,Yusuke, Kirishima-shi Kagoshima 899-4312 (JP); KOHSAKA,Shoji, Kirishima-shi Kagoshima 899-4312 (JP)
(74) Representative: HOFFMANN EITLE
(86) International application number: PCT/JP2009/065070
(87) International publication number: WO 2010/024383

(57) **Abstract**

Disclosed are a porous ceramic member having improved thermal shock resistance and a filter. Also disclosed in a method for producing a porous ceramic member, which can provide a porous ceramic member having high porosity and large pore diameters without using a pore-forming agent. The porous ceramic member is **characterized by** comprising single crystal particles 11 each of which is composed of a single crystal containing Al, Ti and O, and polycrystalline particles 12 each of which is composed of a plurality of crystals having different crystal axis directions. The porous ceramic member is also **characterized in that** single crystal particles 11 as well as a single crystal particle 11 and a polycrystalline particle 12 are partially bonded with each other through an amorphous material 13 which contains Si. As a result, the porous ceramic member can have improved thermal shock resistance and mechanical strength.

## Description

### Technical Field

The present invention relates to a porous ceramic member and a method for manufacturing the same, and a filter. For example, the present invention relates to a porous ceramic member that can be used for such as heat insulating materials, supporting materials of high-temperature members, honeycomb structures for an automotive exhaust gas catalyst carrier, honeycomb structures for particulate trapping (removal of particulate substances) of diesel engine vehicles, honeycomb structures for consumer uses such as deodorization and warm air and the like, and method for manufacturing the same, and a filter.

### Background Art

Heretofore, cordierite (2MgO·2Al₂O₃·5SiO₂) has widely put into practice in particular as a honeycomb structure for an automotive exhaust gas catalyst carrier since it has excellent thermal shock resistance.

However, since the cordierite has a heat resisting temperature of about 1,350°C at highest, it was difficult to use at this temperature or higher.

In contrast, aluminum titanate (Al₂TiO₅) is a low thermal expansion ceramic material that has a high melting point such as 1860°C and also has higher heat resistance than that of cordierite. However, aluminum titanate has a problem that it is thermally decomposed into alumina and titania when kept at the temperature of from 900°C to 1,200°C, and thus has only limited application.

Therefore, it has been reported that in order to enhance thermal decomposition resistance of aluminum titanate, additives such as SiO₂, Fe₂O₃, Al2O₃, TiO₂, MgO, CaO and the like are added to aluminum titanate, followed by being molded and further fired at 1,450 to 1,550°C (see Patent Document 1).

There has hitherto been known a sintered body in which a sintered body strength and low thermal expansion properties have been improved by adding MgO and SiO₂ to an Al₂TiO₅ raw powder having mean particle diameter of 1.54 to 8.06 µm, followed by being molded and further fired at 1,500°C (see Patent Document 2).

In addition, there has been known a method for producing a porous aluminum titanate sintered body comprising mixing a coarse powder of aluminum titanate having an average particle diameter of 5 to 50 µm with a fine powder of aluminum titanate having an average particle diameter of not less than 3 µm and less than 5 µm in an amount of not more than 30% by weight to form a bimodal powder, adding a combustible powder having an average particle diameter of 40 to 120 µm in an amount of between 10 to 30% by weight to the bimodal powder, followed by firing at a temperature of not more than 1,550°C in an oxidizing atmosphere (see Patent Document 3).

Patent Document 1: JP 8-290963A
Patent Document 2: JP 1-249657A
Patent Document 3: JP 7-138083A

### Disclosure of the Invention

### Problems to be Solved by the Invention

However, the raw material powder of aluminum titanate has a columnar grain shape. For example, when a honeycomb structure for an automotive exhaust gas catalyst carrier is formed through an extrusion molding, the raw material powder of aluminum titanate tends to be oriented in the extruding direction. As a result, the difference of the thermal expansion coefficient of the honeycomb structure in the extruding direction from the thermal expansion coefficient thereof in a direction perpendicular to the extruding direction increases. When such a honeycomb structure is placed in an environment where a temperature intensely rises and falls, there were problems that the honeycomb structure easily cracks due to the thermal stress and has a low thermal shock resistance.

It has commonly been performed that additives such as SiO₂, Fe₂O₃, Al₂O₃, TiO₂, MgO, CaO and the like are added to a powder of aluminum titanate, followed by being molded and further fired at about 1,500°C. In such a manner, when SiO₂ constituting an amorphous material is added to the aluminum titanate powder, and the mixture is fired at about 1,500°C, the obtained sintered body has a small porosity and also has a small pore diameter. Therefore, in order to use as a filter element, it was required to add a pore-forming material, followed by firing.

Therefore, as described in Patent Document 1, when additives such as SiO₂, Fe₂O₃, Al₂O₂, TiO₂, MgO, CaO and the like are added to the aluminum titanate powder, followed by being molded and further fired at about 1,450 to 1,550°C, the additives such as SiO₂, Fe₂O₃, Al₂O₃, TiO₂, MgO an CaO form a large amount of an amorphous material at the grain boundary of the aluminum titanate, and thus the strength is improved. However, since the porosity and the pore diameter decreases, it is necessary to add a pore-forming material and to fire so as to be used as a filter element.

As described in Patent Document 2, when MgO and SiO₂ are added to a raw powder of Al₂TiO₅ having a mean particle diameter of 1.54 to 8.06 µm, followed by being molded and further fired at a high temperature such as 1,500°C, a large amount of Al and Mg in Al₂TiO₅ particles diffuse into the grain boundary among the Al₂TiO₅ particles and the content of an amorphous material increases, resulting in an increase of the strength. However, since the porosity and the pore diameter decrease, it was required to add a pore-forming material and to fire the mixture so as to be used as a filter element.

As described in Patent Document 3, in the case where the bimodal powder formed by mixing a coarse powder of aluminum titanate having an average particle diameter of 5 to 50 µm with a fine powder of aluminum titanate having an average particle diameter of not less than 3 µm and less than 5 µm in an amount of not more than 30% by weight is used, the fine powder has a good sintering performance so that the porosity and the pore diameter decrease. Thus, it was required to add a combustible powder (i.e. a pore-forming material) and to fire the powder so as to be used as a filter element.

An object of the present invention is to provide a porous ceramic member which is capable of improving a thermal shock resistance and a filter.

Another object of the present invention is to provide a method for manufacturing a porous ceramic member, which allows to provide a porous ceramic member having a large porosity and a large pore diameter without using a pore-forming material.

### Means for Solving the Problems

The present inventors have found that the thermal shock resistance can be improved by providing single crystal particles, each being composed of a single crystal containing Al, Ti and O, together with polycrystalline particles, each being composed of a plurality of the above crystals having different crystal axis directions, and partially bonding the single crystal particles each other as well as a single crystal particle and a polycrystalline particle each other by using an amorphous material which contains Si.

That is, the porous ceramic member of the present invention comprises single crystal particles, each being composed of a single crystal containing Al, Ti and O, and polycrystalline particles, each being composed of a plurality of the above crystals having different crystal axis directions, wherein, by an amorphous material containing Si, the single crystal particle is partially bonded to the single crystal particle as well as the single crystal particle is partially bonded to the polycrystalline particle.

In those porous ceramic member, for example, the columnar single crystal particles, each being composed of a single crystal containing Al, Ti and O, easily tends to be oriented in the extruding direction by the extrusion molding, while the polycrystalline particles, each being composed of a plurality of crystals having different crystal axis directions, have a structure which is less influenced in the orientation in the extruding direction due to having diversely oriented crystal axes. Thus, it is capable of decreasing the difference of the thermal expansion coefficients between the extruding direction and the direction perpendicular to the extruding direction. Thus, even when the porous ceramic member having the above structure would be placed in an environment where a temperature intensely rises and falls, the member can maintain its strength without being associated with enormously increased cracks due to having small difference of the thermal expansion coefficients.

In addition, the polycrystalline particles have a mean particle diameter not less than 25 µm in the porous ceramic member of the present invention. In such porous ceramic member, it is possible to increase the porosity and the pore diameter.

In the porous ceramic member of the present invention, the area ratio of the polycrystalline particles is not less than 60%. In the porous ceramic member as mentioned above, the abundance ratio of the polycrystalline particles, which are composed of a plurality of the above crystals having different crystal axis directions (or which are composed of a plurality of columnar single crystals having different crystal axis directions) increases, thereby further improved thermal shock resistance can be attained.

The method for producing the porous ceramic member of the present invention comprises;
a granulating step of granulating a feed powder for granulation using a mixed powder containing an Al source powder and a Ti source powder;
a calcination step of calcining the above feed powder for granulation at a calcining temperature not less than 1400°C to form a calcined powder;
a crushing step of crushing the above calcined powder to prepare a mixed powder containing calcined single crystal particles, each being composed of a single crystal containing Al, Ti and O, and calcined polycrystalline particles each being composed of a plurality of the above crystals having different crystal axis directions;
a raw powder preparing step of preparing a raw powder by adding a SiO₂ powder to the above mixed powder;
a molding step of forming a compact (or a green body) containing the raw powder; and
a firing step of firing the compact at the temperature lower than that of the calcining temperature.

In the above method for producing the porous ceramic member, the mixed powder containing calcined single crystal particles, each being composed of a single crystal containing Al, Ti and O, and calcined polycrystalline particles each being composed of a plurality of the above crystals having different crystal axis directions is prepared by crushing the above calcined powder and the raw powder is prepared by adding SiO₂ powder to the above mixed powder, followed by being fired at a temperature lower than that of the calcining temperature. Thus, each of the single crystal particles as well as each of the single crystal particle and the polycrystalline particle is bonded with each other by an amorphous material containing Si without forming mutual sintering between the single crystal particles and mutual sintering between a single crystal particle and a polycrystalline particle, so that a porous ceramic member having a large porosity and a large pore diameter can be obtained without using a pore-forming material.

The filter of the present invention comprises a filter element formed from the above-mentioned porous ceramic member. Such a filter shows an improved long-term reliability due to using the porous ceramic member having an improved thermal shock resistance as the filter element.

### Effects of the Invention

In the porous ceramic member of the present invention, for example, the columnar single crystal particles, each being composed of a single crystal containing Al, Ti and O, easily tends to be oriented in the extruding direction, while the polycrystalline particles, each being composed of a plurality of crystals having different crystal axis directions, have a structure which is less influenced in the orientation in the extruding direction due to having diversely oriented crystal axes, and as a result, it is capable of decreasing the difference of the thermal expansion coefficients between the extruding direction and the direction perpendicular to the extruding direction. Thus, even when the porous ceramic member having the above structure would be placed in an environment where a temperature intensely rises and falls, the member can maintain its strength without being associated with enormously increased cracks due to having small difference of the thermal expansion coefficients. Accordingly, when the porous ceramic member as mentioned above is used as a filter, it can improve a long-term reliability.

In the method for producing the porous ceramic member of the present invention, each of the single crystal particles as well as each of the single crystal particles and the polycrystalline particles is bonded with each other by an amorphous material containing Si without forming mutual sintering between the single crystal particles and mutual sintering between a single crystal particle and a polycrystalline particle. Therefore, a porous ceramic member having a large porosity and a large pore diameter can be obtained without using a pore-forming material.

### Brief Description of the Drawings

Fig. 1 is a perspective view showing a honeycomb structure (filter element) using a porous ceramic member of the present invention.
Fig. 2 is photograph of the surface showing a structure of the porous ceramic member of the present invention.
Fig. 3 is an explanatory view showing a microstructure of the porous ceramic member of the present invention.
Fig. 4 is photograph showing a result of an EBSD analysis.

### Mode for Carrying Out the Invention

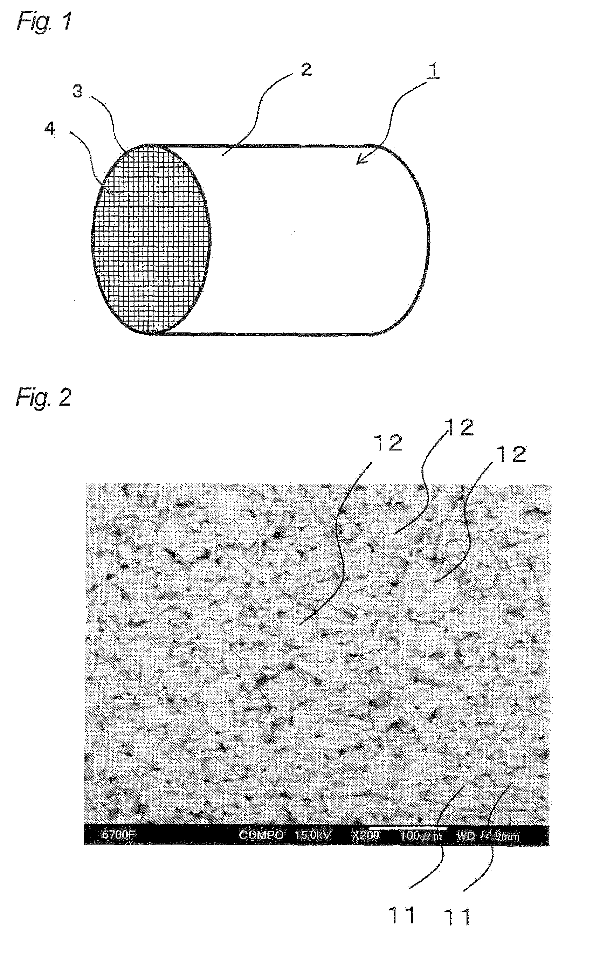

Fig. 1 shows an example of a filter element 1, in which a quadrangular prism-shaped cell 3 is formed in the longitudinal direction of a columnar porous ceramic member which is surrounded with an outer peripheral wall 2, and a partition 4 therebetween is porous. Fig. 1 shows a honeycomb structure including a quadrangular prism-shaped cell as a basic structure, where a plurality of the quadrangular prism-shaped cells is arranged. However, the filter element 1 of the present invention is not limited to a filter element including the quadrangular prism-shaped cell as the basic structure. For example, the filter element also has a shape other than a honeycomb. Even in the case of the honeycomb structure, the cell shape may be triangle, hexagon, lozenge, or a mixture thereof.

It is also possible to use as a filter by entirely or partially closing in an opening direction of the honeycomb thereby forming a sandwiched structure to impart impact resistance. A filter may be sometimes formed by adding a catalyst to a porous ceramic member. The filter of the present invention is formed by including the above filter element in the container.

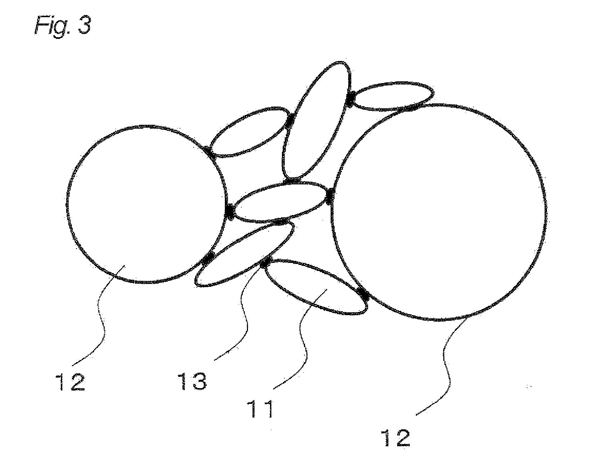

The porous ceramic member of the present invention comprises single crystal particles 11, each being composed of a single crystal (pseudo-brookite type crystal) containing Al, Ti and O, and polycrystalline particles 12, each being composed of a plurality of the above crystals having different crystal axis directions as shown in Fig. 2 and 3. In other word, each polycrystalline particle 12 is formed with a plurality of agglomerated and neck bonded single crystal particles 11. The porous ceramic member of the present invention is formed by partially bonding the single crystal particles 11 each other as well as the single crystal particle 11 and the polycrystalline particle 12 each other by an amorphous material 13 that contains Si. In Fig. 3, the single crystal particles that form the polycrystalline particles 12 are omitted. In some cases, the polycrystalline particles 12 are mutually bonded with each other by an amorphous material containing Si.

The crystals having different crystal axis directions mean the crystals wherein at least one crystal axis direction does not conform to each other among the crystal axes including a-axis, b-axis and c-axis of the crystal. It is possible that all crystal axis direction does not conform to each other. The present inventors conceive that each direction of each c-axis does not conform to each other in the plurality of crystals that form the polycrystalline particles 12.

The single crystal particle containing Al, Ti and O is an aluminum titanate type crystal, which is a compound containing Al, Ti and 0 and which may be sometimes referred to as a pseudo-brookite type crystal particle. The pseudo-brookite type crystal includes, in addition to aluminum titanate, the composition formula of which is represented by the formula: Al₂TiO₅, magnesium titanate which is represented by the formula: MgTi₂O₅. These compositions are known to form an all proportional solid solution including a crystal composed of a solid solution of aluminum titanate and magnesium titanate (otherwise known as aluminum magnesium titanate), which is represented by the formula:

Al₂₍₁₋ₓ₎MgₓTi₍₁₊ₓ₎O₅

wherein the value of x is 0.21≤x≤0.5.

In the present invention, the crystal containing Al, Ti and 0 includes the crystal of the compositions, for example, the composition formula of which is represented by the formulae including Al₂TiO₅, Al₂₍₁₋ₓ₎MgₓTi₍₁₊ₓ₎O₅ and Al_{2(1-x-y)} MgₓFe_{2y}Ti₍₁₊ₓ₎O₅. The single crystal particle 11 containing Al, Ti and O is a single crystal particle 11 composed of a single crystal selected from a group of the above-mentioned composition formulae, in which the crystal axis is oriented in one direction since it is composed of a single crystal.

Hereinafter, an example of the crystal containing Al, Ti and O (pseudo-brookite type crystal), which contains Al, Ti and Mg, will be illustrated. The pseudo-brookite type crystal generally grows in a columnar shape, so that the crystal particle thereof has a columnar crystalline structure.

The amorphous material 13 contains, in addition to Si, Al and Mg. These Al and Mg were diffused from the single crystal particles 11 and the polycrystalline particles 12 during a firing step.

Almost all single crystal particles 11 have the columnar crystalline structure and particularly have an aspect ratio not less than 1.2. It is desired that the single crystal particles 11 have a mean particle diameter of 5 to 20 µm. When the single crystal particles 31 have the mean particle diameter in a range of 5 to 20 µm, the porous ceramic member can have a large porosity and a large mean pore diameter, and can maintain a mechanical strength at a high level. The mean particle diameter of the single crystal particles 11 can be controlled for example by varying the calcining temperature.

The particle diameter means the diameter of a circle, which is obtained by measuring an area of a particle at an arbitrary cross section thereof and converting the measured area to an area of a circle appearing at the cross section, provided that the particle is a sphere, which can be measured by an image analysis.

The polycrystalline particles 12 have the sectional shape of a circle or an ellipse. When a polycrystalline particle is embedded with a resin, the particle preferably has a mean particle diameter of not less than 25 µm, in particular not less than 30 µm, and further from 30 to 70 µm at the cross section thereof. When the polycrystalline particles 12 have a mean particle diameter of 25 µm or more in the cross section thereof after they were embedded with a resin, the thermal shock resistance can be improved. The matter whether or not the polycrystalline particles 12 are composed of a plurality of single crystal particles 11 can be confirmed by observing each cross section of the polycrystalline particles 12 in the sintered body using a micrograph. In addition, it can be observed by an EBSD analysis, which will be explained later. The single crystal particles 11 are neck bonded with each other to form the polycrystalline particles 12.

In the present invention the single crystal particles 11 have an area ratio of not less than 10%, and the polycrystalline particles 12 have an area ratio of not less than 60% at an arbitrary cross section.

The thermal shock resistance can be further improved by the matter that the polycrystalline particles 12 have an area ratio of at lease 60% at an arbitrary cross section. It is desired that the polycrystalline particles 12 have an area ratio of not more than 90% at an arbitrary cross section in order to simultaneously accomplish the thermal shock resistance and the mechanical strength.

When the single crystal particles 11 have an area ratio of not less than 10% at an arbitrary cross section, the mutual bonding among the single crystal particle 11 and the polycrystalline particle 12 by the amorphous material 13 becomes strong, thereby the mechanical strength can be further improved.

For example, in the case where the single crystal particles 11 are composed of an aluminum titanate represented by the formula: Al₂TiO₅, a single crystal particle 11 has a columnar shape, wherein each of the a-axis and b-axis is directed along the direction perpendicular to the longitudinal direction of the single crystal particle 11, while the c-axis is directed along the longitudinal direction of the single crystal particle 11. The crystal has a thermal expansion coefficient of 11.8×10⁻⁶/°C in the a-axis, a thermal expansion coefficient of 19.4×10⁻⁶/°C in the b-axis, and a thermal expansion coefficient of -2.6×10⁻⁶/°C in the c-axis, and thus shows thermal expansion anisotropy. The other pseudo-brookite type crystals, such as MgTi₂O₃ and Al₂₍₁₋ₓ₎ MgₓTi₍₊ₓ₎O₅ also show the thermal expansion anisotropy which is similar to the above.

The porous ceramic member of the present invention has not only the single crystal particles 11 but also the polycrystalline particles 12 which are composed of the agglomerated single crystal particles 11. A polycrystalline particle 12 has a structure wherein about 5 to 20 numbers of columnar single crystal particles 11 are agglomerated in various directions and the single crystal particles 11 are neck bonded with each other. Thus, the polycrystalline particle 12 has substantially no thermal expansion anisotropy. In other word, the polycrystalline particle 12 is composed of a plurality of pseudo-brookite type crystals containing Al and Ti which are directed in various directions. In another word, the polycrystalline particle 12 is composed of a plurality of pseudo-brookite type crystals which are directed in various directions.

When a honeycomb structure is formed with using the porous ceramic member of the present invention by the extrusion molding, for example, to apply to a honeycomb structure for an automotive exhaust gas catalyst carrier, the columnar single crystal particles 11 are easily oriented in the extruding direction, while the polycrystalline particle 12 each having almost spherical shape or the shape similar to a spherical shape are oriented in various directions. It is because the porous ceramic member of the present invention comprises the polycrystalline particle 12 composed of the agglomerated single crystal particles 11 in addition to the single crystal particles 11. The directions of the crystals of each particle within the single crystal particle and the polycrystalline particle can be measured by EBSD (Electron Backscattered Diffraction) analysis.

Therefore, a porous ceramic member having a structure, wherein the columnar single crystal particles 11 oriented in any direction and the polycrystalline particle 12 composed of the agglomerated columnar single crystal particles 11 being oriented in various directions are simultaneously present, can be obtained. Since the porous ceramic member has such a structure, when a compact of honeycomb structure is fired and cooled, many micro-cracks generate within the polycrystalline particles 12 due to the anisotropy of the thermal expansion of the crystal axes of the single crystal particles 11, while less micro-cracks generate in the single crystal particles 11 which are located among the polycrystalline particles 12.

Thus, the strength lowers within the polycrystalline particles 12 where many micro-cracks are present, but the thermal shock resistance increases due to having a small thermal expansion coefficient. On the other hand, there is a difference in the thermal shrinkage rate between the extruding direction and the direction perpendicular to the extrusion direction in the single crystal particles 11 where less micro-cracks are present. Therefore, the strength increases, while a thermal shock resistance decreases. That is, the porous ceramic member being composed of the single crystal particles 11 and the polycrystalline particles 12 as mentioned above can obtain both improved thermal shock resistance and mechanical strength.

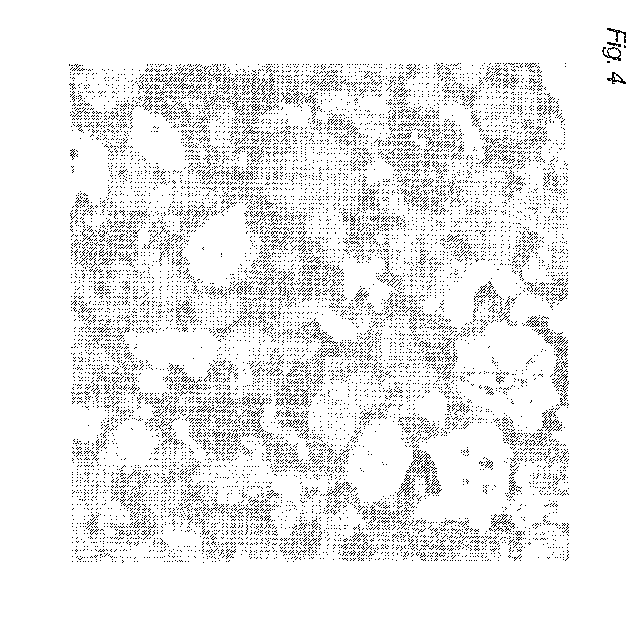

Fig. 4 shows a result of EBSD analysis. In the EBSD analysis, the crystal particles having different crystal directions are shown in a different color. Thus, it can be confirmed whether or not one particle is composed of a plurality of crystals.

Each of the ratios and the mean particle diameters of the polycrystalline particles and the single crystal particles can be determined by the analysis using an image analysis equipment and a metallographic microscope of the polycrystalline particles after classifying the polycrystalline particles each composed of a plurality of crystals and the single crystal particles each composed of a single particle by the EBSD analysis of the porous ceramic member.

It is desirable that the porous ceramic member of the present invention contains Si in the amount of 0.5 to 5% by mass in terms of SiO₂ based on the total amount. It is capable to sufficiently bond the pseudo-brookite type crystal particles each other by the amorphous material containing Si and improve the strength due to containing Si in the amount of 0.5 to 5% by mass in terms of SiO₂. It is also possible to suppress the decrease of the porosity and the pore diameter, since the porous ceramic member contains a small amount of Si. It is desirable that the porous ceramic member contains Si in the amount of 1 to 3% by mass in terms of SiO₂ based on the total amount from the viewpoint of attaining a particular strength and a certain porosity and pore diameter. The amount of Si can be measured by fluorescence X-ray spectroscopy or inductively coupled plasma (ICP) emission spectrometry.

In addition, it is preferable that the porous ceramic member of the present invention contains Fe in the columnar single crystal particles 11 and the polycrystalline particles 12. The pseudo-brookite type crystal containing Fe includes iron titanate, which can form an all proportional solid solution together with the above mentioned aluminum titanate and magnesium titanate. For example, there exists a crystal composed of the solid solution of aluminum titanate and iron titanate (otherwise known as aluminum iron titanate), which is represented by the composition formula: Al₂₍₁₋ₓ₎Fe₂ₓTiO₅ wherein the value of × is 0.4≤x≤0.9. In addition, there exists a crystal composed of the solid solution of three components of aluminum titanate, magnesium titanate and iron titanate, which is represented by the composition formula: Al_{2(1-x-y)} MgₓFe_{2y}Ti₍₁₊ₓ₎O₅ wherein the value of x is 0.21≤x≤0.8 and the value of y is 0.05≤x≤0.2. In the porous ceramic member of the present invention, by using the pseudo-brookite type crystal in which three components of aluminum titanate-magnesium titanate-iron titanate are solid-soluted as the crystal particle, the crystal particle is made to be a thermochemically stable component, and the decomposition of the crystal due to the heat is suppressed, and thus the thermal resistance can be improved.

Then, the method for manufacturing a porous ceramic member of the present invention will be described below. For example, raw materials required to form a solid solution represented by the formula: Al₂₍₁₋ₓ₎ MgₓTi₍₁₊ₓ₎O₅ are prepared. Although Fe may be sometimes solid-soluted in this solid solution, the case where Fe is not solid-saluted will be described herein.

For example, an alumina raw material, a titania raw material and a magnesium carbonate raw material are compounded and mixed so as to form a predetermined composition. When it is possible to form a solid solution represented by the formula: Al₂₍₁₋ₓ₎MgₓTi₍₁₊ₓ₎O₅, the raw materials including such as hydroxide, nitrate and the like or the compounds thereof may be used instead of metal oxides, carbonates.

It is desired to use the materials having high purity, for example, a purity of not less than 99.0%, and particularly not less than 99.5% as the alumina raw material, titania raw material and magnesium carbonate raw material.

A mixed raw material of the above alumina raw material, titania raw material and magnesium carbonate raw material is granulated. Granulation may be performed by mixing the raw material in a dry state, or by charging the raw material in a mill such as a rotary mill, a vibrating mill, a beads mill or the like, forming a slurry by wet-mixing with at least one of water, acetone and isopropyl alcohol (IPA), and drying the slurry. The obtained slurry may be fed in a container, dried with heating and then granulated. Granulation may be performed by drying using a spray dryer, or granulation may be performed by drying using the other method. As the granulated powder, granules having a mean particle diameter of not less than 50 µm are prepared.

Then, the granulated powder is calcined in an oxygen-containing atmosphere, for example, atmospheric air. In order to sufficiently produce the pseudo-brookite type crystal, calcination is performed at 1,400°C or more, that is higher than the temperature (about 1,200°C) at which the pseudo-brookite type crystal is produced, for 1 to 5 hours. It is desirable that the calcining temperature is particularly not less than 1,450°C, and more desirably not less than 1,470°C. In view of the prevention of firm aggregation of the calcined powder, it is desirable that the calcining temperature is not more than 1,500°C. Thus, the pseudo-brookite type crystal powder in which Al, Mg and Ti are solid-soluted therein is prepared. According to the above calcination procedure, a powder of almost complete (100%) pseudo-brookite type crystal is prepared.

The obtained powder is a calcined powder having spherical shape having a mean particle diameter of not less than 25 µm reflecting the sizes and the shapes of the granulated powder. The calcined powder becomes the calcined polycrystalline particle powder, which will be described later. The calcined powder has a structure in which a plurality of columnar single crystal particles is agglomerated. As the calcining temperature increases, the calcined polycrystalline particle powder becomes reduced in size by contraction. Thus, the single crystal particles that form the polycrystalline particles become increased in size. The term neck bonding in the present invention means a condition where particles are bonded at a seizure portion between the particles (see Ceramics Dictionary: edited by The Ceramic Society of Japan), which is not completely calcined condition, but is an intermediate condition during calcination.

Then, the calcined powder is crushed in a dry state or a wet state, wherein the calcined powder having spherical shape is crushed into the columnar calcined powder that forms the spherical calcined powder at a certain rate. The crushing procedure is performed by introducing the calcined powder and ceramic balls into a container and rotating the container. The crushing time may be from 0.5 to 10 hours, but is not limited thereto. It is necessary for the powder after being crushed to ensure a condition where the calcined polycrystalline particle powder and the calcined single crystal particle powder are present in a mixed state. Thus, it is possible to adjust the ratio of the calcined polycrystalline particle powder to the calcined single crystal particle powder by changing the crushing condition, for example, the diameter of the ceramic balls and the crushing time, resulting in that the particle sizes of the crushed powder can be easily controlled. Accordingly, it is possible to adjust the porosity and the pore diameter of the obtained porous ceramic member.

To the pseudo-brookite type crystal powder, a SiO₂ powder is added, followed by being mixed. The mixing method can be performed in a dry state or in a wet state. A powder having a mean particle diameter of 1 to 3 µm is used as the SiO₂ powder. It is possible to uniformly disperse the SiO₂ powder on the surface of the calcined powder using a powder having a particle diameter within the above range.

To this mixed powder, a forming aid is added and the mixture is formed into a honeycomb shape by extrusion molding using a dice. The obtained compact is sufficiently dried and fired in an oxidative atmosphere at a temperature lower than the calcining temperature, for example, less than 1,400°C for 0.5 to 5 hours, and thus a porous ceramic member having a honeycomb shape can be formed.

Specifically, a calcined polycrystalline particle powder that forms the polycrystalline particles is generated during the calcination. The crushing of the calcined polycrystalline particle powder is not completely performed, but is performed in a halfway manner. In other word, a portion of the enormous number of calcined polycrystalline particle powder is crushed into the calcined single crystal particle powder that form the calcined polycrystalline particle powder, but another portion of the calcined polycrystalline particle powder is kept as it is or is present in a state where the periphery thereof is slightly crushed. Thus, the powder after crushed exists in a state where the calcined polycrystalline particle powder and the calcined single crystal particle powder are present in a mixed condition. Then, the amorphous material containing Si is added and fired at a temperature lower than the calcining temperature, thereby the structure can be formed, wherein the single crystal particles 11 are mutually bonded each other and the single crystal particle 11 and the polycrystalline particle 12 are mutually bonded each other by the amorphous material 13 containing Si, while the condition of the particles after being calcined is substantially maintained.

Thus, in order to form the structure, wherein the single crystal particles 11 are mutually bonded each other and the single crystal particle 11 and the polycrystalline particle 12 are mutually bonded each other by the amorphous material 13 containing Si, while the condition of the particles after being calcined is substantially maintained, it is necessary to perform the calcination at a temperature lower than the calcining temperature. In addition, it is desirable that the calcined single crystal particle powder has a large particle size so as to prevent the particles from sintering at such a sintering temperature. It is desirable that the calcined single crystal particle powder has a mean particle size of 10 to 30 µm.

In the above production method, from the pseudo-brookite type crystal particles, Al and Mg tend to diffuse into the amorphous material by firing at a low temperature and Al and Mg diffuse into the outer peripheral portion side of the particles, wherein Al and Mg partially diffuse into the amorphous material and partially remain at the outer peripheral portion of the crystal particles, thereby a structure that contains Al and Mg inside and the outer peripheral portion of the crystal particles at no less than a certain level, while the outer peripheral portion is made rich in the content of Al and Mg rather than inside portion of the crystal particles. Thus the porous ceramic member obtains an improved chemical resistance. Moreover, it is possible to obtain the crystal particles as they were designed and also obtain the thermal resistance as they were designed, since mutual diffusion of the elements such as Al, Mg, Si and the like can be suppressed.

In the method for producing the porous ceramic member of the present invention, a mixed powder containing the calcined single crystal particles and the calcined polycrystalline particles having a particle diameter not less than 25 µm is prepared by crushing the calcined powder, and a raw powder being prepared by adding SiO₂ powder to the above mixed powder, followed by firing at a temperature lower than the calcining temperature. Therefore, each of the single crystal particles as well as each of the single crystal particle and the polycrystalline particle is bonded with each other by an amorphous material containing Si without forming mutual sintering between the single crystal particles and mutual sintering between a single crystal particle and a polycrystalline particle. Therefore, a porous ceramic member having a large porosity and a large pore diameter can be obtained without using a pore-forming material.

The filter of the present invention is formed by including filter element in a container. Thus, a filter having high thermal shock resistance and mechanical strength and also improved long-term reliability can be obtained.

Examples of the present invention will be specifically described, but the present invention is not limited to these Examples.

### Example 1

An alumina raw material used is LS110 manufactured by Nippon Light Metal Company, Ltd., and a mean particle diameter is 1.5 µm, an amount of impurities in an alkali metal is 0.1% by mass, and an amount of impurities in silicone is 0.1% by mass. A titania raw material used is JA-3 manufactured by TAYCA Corporation, and a mean particle diameter is 0.2 µm and an amount of impurities in an alkali metal is no.3% by mass. A magnesium carbonate raw material used is TT manufactured by Tokuyama Corporation, and an apparent specific gravity is 0.23 g/ml, and an alkali metal and silica are free from impurities. An iron oxide raw material used is JC-W manufactured by JFE Chemical Corporation, a mean particle diameter is 1.0 µm.

As a silica raw material, Snow Mark SP-3 (manufactured by MARUKAMA Co.,Ltd.) having a mean particle diameter of 1.2 µm was used.

First, in order to prepare a pseudo-brookite type crystal powder represented by the formula: Al_{0.6}Mg_{0.6}Fe_{0.2}Ti_{1.6}O₅ alumina raw material, titania raw material, magnesium carbonate raw material and iron oxide raw material described above were compounded, and isopropyl alcohol (IPA) was added as a solvent. Using an alumina ball each having a diameter of 10 mm as a medium, these components were mixed by a rotary mill for 72 hours to obtain a slurry. The obtained slurry was heated to 110°C thereby vaporizing IPA, dried and then granulated. This granulated powder has substantially spherical shape and has the particle diameter as shown in Table 1. The mean particle diameter was varied by selecting the particles that passed the sieve or remained on the sieve or changing the mesh size of a sieve using sieve treatment (or mesh treatment).

The granulated powder was calcined at a temperature shown in Table 1 in an atmosphere, thereby synthesized a pseudo-brookite type crystal powder containing Al, Ti, Mg and Fe and obtained a calcined powder.

Then, the calcined powder was crushed in a ball mill using alumina balls each having a diameter as shown in Table 1 for a period of time as shown in Table 1. In the specimens of the present invention, the calcined polycrystalline particle powder having a spherical shape, which remained without being crushed and the calcined single crystal particle powder having a columnar shape, which was obtained by being crushed were observed.

Sample No. 7 is a specimen wherein the calcined polycrystalline particle powder was crushed so that the powder completely disappeared.

To 100 parts by mass of the crushed calcined powder, a silica powder in the amount shown in Table 1 was added, followed by mixing by using a universal kneader to obtain a raw powder.

To 100 parts by mass of the raw powder, 15 parts by mass of methylcellulose, 5 parts by mass of emulsion wax and 25 parts by mass of ionized water were added, followed by mixing by using a universal kneader to obtain a clay for extrusion molding.

Then, a columnar honeycomb structure having a diameter of 150 mm and a length of 100 mm was formed using above clay. After the obtained compact was dried at 80°C for 24 hours in an atmosphere, the compact was fired at a temperature shown in Table 1 for 4 hours in an atmosphere, thereby a columnar honeycomb structure which is composed of porous ceramic member was obtained.

After pores of the obtained porous ceramic member were filled with a resin, a cross section of which was subjected to an EBSD (Electron Backscattered Diffraction) analysis, thereby the particles being classified into the polycrystalline particles and the single crystal particles, and then the area ratio of the polycrystalline particles and the area ratio (%) of the single crystal particles were measured using an image analysis equipment and a metallographic microscope, the result of which is shown in Table 2. In addition, each mean particle diameter of the polycrystalline particles and the single crystal particles was measured and the results are shown in Table 2. The area ratio was measured within an area of 600µm X 450µm using a metallographic microscope (magnification of 200 times).

After cutting a specimen off from the obtained porous ceramic member, the porosity and the pore diameter thereof were determined by a mercury penetration method. After the honeycomb structure was subjected to a rapid temperature rising treatment to heat to 1400°C in one minute in an atmosphere, the structure was left cooled and was measured by X-ray transmission method as to whether cracks had generated within the honeycomb structure. Specifically, ten specimens of each honeycomb structure that had been subjected to a rapid temperature rising treatment were prepared and each specimen was measured as to whether any cracks generated on the surface or inside of the honeycomb structure specimen by irradiating X-ray to the specimens. In Table 2, the sample in which no crack was found in ail of ten honeycomb structure specimens was rated as O (good), while the sample in which cracks were found in at least three honeycomb structure specimens was rated as X (bad). In the above measurement, the crack is meant to have a gap not less than a few hundred µm, which does not include a gap less than 1 µm.

To 100 parts by mass of the above raw powder, 5 parts by mass of paraffin wax and IPA were added, followed by being mixed, dried and molded into a round bar. The product was fired in an atmosphere similar to the above honeycomb structure specimens. Then the specimen having 5 mm diameter and 40 mm length was subjected to the three-point bending strength measurement under a condition of a span distance of 30 mm at a cross head speed of 0.5 mm/min. The results are shown in Table 2.

**[Table 1]**

| Sample No. | granulation | calcining temperature (° C) | crushing condition | | silica powder | firing temperature (°C) |
|---|---|---|---|---|---|---|
| | mean particle diameter (µm) | | ball diameter (mm) | crushing time (h) | added amount (part by mass) | |
| 1 | 85 | 1475 | 10 | 2 | 2 | 1375 |
| 2 | 154 | 1475 | 10 | 2 | 2 | 1375 |
| 3 | 156 | 1500 | 10 | 2 | 2, | 1375 |
| 4 | 90 | 1400 | 10 | 2 | 2 | 1375 |
| 5 | 85 | 1475 | 10 | 2 | 1 | 1400 |
| 6 | 50 | 1475 | 10 | 2 | 2 | 1350 |
| *7 | 90 | 1475 | 3 | 10 | 3 | 1500 |
| 8 | 90 | 1475 | 10 | 2 | 2 | 1375 |

| | | | | | | |
|---|---|---|---|---|---|---|
| Symbol * is beyond the scope of the present invention | | | | | | |

**[Table 2]**

| Sample No. | polycrystalline particles | | single crystals | | pore diameter (µm) | porosity (%) | thermal shock resistance | three-point bending strength (MPa) |
|---|---|---|---|---|---|---|---|---|
| | area ratio (% ) | mean particle diameter (µm) | area ratio (%) | mean particle diameter (µm) | | | | |
| 1 | 81 | 25 | 19 | 14 | 11 | 42 | O | 15 |
| 2 | 85 | 55 | 15 | 15 | 12 | 45 | O | 14 |
| 3 | 79 | 65 | 21 | 20 | 15 | 50 | O | 10 |
| 4 | 60 | 30 | 40 | 10 | 8 | 40 | O | 16 |
| 5 | 80 | 30 | 20 | 17 | 11 | 35 | O | 13 |
| 6 | 82 | 31 | 18 | 18 | 10 | 40 | O | 15 |
| *7 | - | - | 100 | 15 | 2 | 20 | X | 18 |
| 8 | 88 | 39 | 12 | 17 | 16 | 47 | O | 10 |

| | | | | | | | | |
|---|---|---|---|---|---|---|---|---|
| Symbol * is beyond the scope of the present invention | | | | | | | | |

As is apparent from Tables 1 and 2, each of Samples Nos. 1 to 6 is a porous ceramic member having a pore diameter not less than 8 µm and a porosity not less than 35%, which has an excellent thermal shock resistance and has a three-point bending strength of not less than 10MPa. On the other hand, Sample No. 7 (which is beyond the scope of the present invention) had somewhat high three-point bending strength value of 18 MPa, but had a small pore diameter and a small porosity and also had a low thermal shock resistance.

### Example 2

First, in order to prepare a pseudo-brookite type crystal powder represented by the formula: Al_{1.2}Mg_{0.2}Fe_{0.4}Ti_{0.2}O₅, alumina raw material, titania raw material, magnesium carbonate raw material and iron oxide raw material described above were compounded, which was granulated in a manner similar to that of Example 1. Thus obtained granulated powder had almost spherical shape and had a mean diameter of 90 µm.

The granulated powder was calcined at a temperature of 1510°C in an atmosphere, thereby synthesized a pseudo-brookite type crystal containing Al, Ti, Mg and Fe and obtained a calcined powder. The calcined powder was crushed in a ball mill using alumina balls each having a diameter of 10 µm for two hours. In these specimens, the calcined polycrystalline particle powder having a spherical shape, which remained without being crushed and the calcined single crystal particle powder having a columnar shape, which was obtained by being crushed were observed.

To 100 parts by mass of the crushed calcined powder, 2% by mass of silica powder was added, followed by mixing using a universal kneader to obtain a raw powder.

To 100 parts by mass of the raw powder, 15 parts by mass of methylcellulose, 5 parts by mass of emulsion wax and 25 parts by mass of ionized water were added, followed by mixing using a universal kneader to obtain a clay for extrusion molding.

Then, a columnar honeycomb structure having a diameter of 150 mm and a length of 100 mm was formed using the above clay. After the obtained compact was dried at 80°C for 24 hours in an atmosphere, the compact was fired at 1375°C for 4 hours in an atmosphere, thereby a columnar honeycomb structure which is composed of porous ceramic member was obtained.

As to the obtained porous ceramic member, each area ratio of the polycrystalline particles and the single crystal particles, the mean particle diameter, the pore diameter, the porosity, the thermal shock resistance, and the three-point bending strength were measured in a manner similar to that of Example 1, thereby obtained the results as follows: the area ratio and the mean particle diameter of the polycrystalline particles were 89% and 43µm, respectively; the area ratio and the mean particle diameter of the single crystal particles were 11% and 18µm, respectively; the pore diameter was 16µm; the porosity was 47%; the three-point bending strength was 10MPa; and no crack was found in ten specimens of the honeycomb structure relating to the thermal shock resistance.

### Brief Description of Reference Numeral

- 1:: Filter element
- 2:: Outer peripheral wall
- 3:: Cell
- 4:: Partition
- 11:: Single Crystal particles
- 12:: Polycrystalline particles
- 13:: Amorphous material

## Claims

1. A porous ceramic member comprising:
single crystal particles, each being composed of a single crystal containing Al, Ti and O; and
polycrystalline particles, each being composed of a plurality of the above crystals having different crystal axis directions,
wherein, by an amorphous material containing Si, the single crystal particle is partially bonded to the single crystal particle as well as the single crystal particle is partially bonded to the polycrystalline particle.

2. The porous ceramic member according to claim 1, wherein the polycrystalline particle has a mean particle diameter of not less than 25 µm.

3. The porous ceramic member according to claim 1 or 2, wherein the polycrystalline particles have an area ratio of not less than 60% at an arbitrary cross section.

4. A method for producing the porous ceramic member comprising;
a granulating step of forming a feed powder for granulation using a mixed powder containing an Al source powder and a Ti source powder;
a calcination step of calcining the above feed powder for granulation at a calcining temperature not less than 1400°C to form a calcined powder;
a crushing step of crushing the above calcined powder to form a mixed powder containing calcined single crystal particles, each being composed of a single crystal containing Al, Ti and O, and calcined polycrystalline particles each being composed of a plurality of the above crystals having different crystal axis directions;
a raw powder preparing step of preparing a raw powder by adding a SiO₂ powder to the above mixed powder;
a molding step of forming a compact using the raw powder; and
a firing step of firing the compact at the temperature lower than that of the calcining temperature.

5. A filter comprising a filter element formed from the porous ceramic member according to any of claims 1 to 3.
